# EUROPEAN PATENT SPECIFICATION

(11) **EP 0 981 965 B1**
(45) Date of publication and mention of the grant of the patent: **25.10.2006**
(21) Application number: 99306687.7
(22) Date of filing: 23.08.1999
(51) Int. Cl.: A23C 19/06, A23L 1/23

(54) **Highly flavored component for use in cheese manufacture and method for producing**
Hocharomatisierter Bestandteil zur Verwendung in der Käseherstellung und Verfahren zu dessen Herstellung
Produit fortement aromatisé pour l'utilisation dans la fabrication de fromage et son procédé de préparation

(30) Priority: 27.08.1998 US 141082
(43) Date of publication of application: 01.03.2000
(73) Proprietor: KRAFT FOODS HOLDINGS, INC., Northfield, Illinois 60093 (US)
(72) Inventor: Silver, Richard Stuart, Wilmette, Illinois 60091 (US); Brown, Peter Harris, Glenview, Illinois 60025 (US); Boyd, Mary Ann, Island Lake, Illinois 60042 (US); Woolfschoon-Pombo, Alan Frederick, 85354 Freising (DE)
(74) Representative: Smaggasgale, Gillian Helen

(56) References cited:
- US-A- 3 975 544
- US-A- 4 675 193
- US-A- 4 708 876
- US-A- 4 752 483
- US-A- 5 773 054
- KILCAWLEY K.N. ET AL INTERNATIONAL DAIRY JOURNAL vol. 8, no. 1, 1998, pages 1 - 10

## Description

### Field of the Invention

The present invention relates generally to a method for producing a highly flavored component for use in cheese manufacture in a short period of time. More particularly, the present invention is directed to producing a highly flavored component which can be utilized in the manufacture of process cheese or which can be spray dried to produce a dehydrated highly flavored powder, wherein the method of production does not utilize a whey draining step or the production of cheese curds.

### Background of the Invention

Natural cheese is generally made by developing acidity in milk and setting the milk with a clotting agent, such as rennet, or by developing acidity to the isoelectric point of the protein. The set milk is cut and whey is separated from the resulting curd. The curd may be pressed to provide a cheese block. Curing typically takes place over a lengthy period of time under controlled conditions. Cheddar cheese, for example, is cured for a period of at least four months and may be cured for a period in excess of one year to obtain the full flavor desired in cheddar cheese.

It is well known to provide a product having some of the characteristics of natural cheese by grinding a natural cheese, and heating it with an emulsifying salt. The name given to the resulting product depends upon the ingredients used and its composition and, in some instances, is determined by regulations promulgated by the U.S. Food and Drug Administration 21 C.F.R. §133.169-180. For example, the term "pasteurized process cheese" refers to a product comprising a blend of cheeses to which an emulsifying agent, usually an emulsifying salt, and possibly acids, have been added, and which has then been worked and heated into a homogeneous plastic mass. The flavor of process cheese is dependent on utilizing a high proportion of long hold (aged over four months) natural cheese. The use of long hold cheese increases the cost of process cheese due to storage and inventory costs. The yield of natural cheese produced by conventional methods is relatively low, about 10-12 pounds of cheese are produced per 100 pounds of milk. This also increases costs.

The term "pasteurized process cheese food" refers to a product which is prepared from the same materials and the same processes used for manufacture of process cheese. However, cheese food generally has dairy ingredients added thereto, such as cream, milk, skimmed milk, whey, or any of these from which part of the water has been removed (e.g., concentrated skimmed milk). The moisture level in process cheese food is generally higher than that of process cheese and may be up to about 44%. Fat is generally present at a level of not less than 23%.

The term "pasteurized process cheese spread" refers to a product which is similar to cheese food, in the sense that it can contain the indicated dairy ingredients. Process cheese spread, however, may have a moisture level as high as 60%, and a minimum fat level of 20%.

Process cheese, process cheese food and process cheese spread are referred to as "standardized products", since their methods of manufacture and composition are determined by Federal Standards of Identity.

As used herein, the term "process cheese-type products" includes those products known and referred to as "pasteurized process cheese", "pasteurized process cheese food", "pasteurized process cheese spread", and "pasteurized process cheese product". "Process cheese type-products" also includes products resembling process cheese, process cheese food, process cheese spread and process cheese product, but which may not meet the U.S. Federal Standards of Identity for any of the above products in that they may contain ingredients not specified by such Standards, such as vegetable oil or vegetable protein, or may not meet the compositional requirements of such Standards. Process cheese-type products also include products having flavor and texture similar to those of a process cheese-type product regardless of the ingredients or manufacturing steps employed, and regardless of whether the Standards have been met.

There have been many efforts to produce a naturally derived highly flavored cheese ingredient, which can be used in process cheese, in a shortened period of time. U.S. Patent No. 4,752,483 to Hagberg, et al. is directed to a method for producing a highly flavored cheese ingredient. In the process of the Hagberg, et al. patent, cheese curd is first produced. In the method of the Hagberg, et al. patent, "green" cheddar-type cheese curds are combined with a protease, a lipase and water and the mixture is incubated for a period of time. As used in the Hagberg, et al. patent, the term "green" cheddar-type cheese curd refers to a cheddar cheese which has been aged less than about 60 days. The cheese curd is ground before it is mixed with the lipase, protease and water. The mixture is then incubated for a period of about 5½ days.

U.S. Patent No. 4,172,900 to Dooley is directed to producing a natural cheese product having a highly intensified American cheese flavor which is adapted for use in the preparation of process cheese. In the method, cheese curd is produced in the usual way, wherein a coagulum is produced from milk, the coagulum is cut to produce curds and whey and the whey is drained to provide cheese curds. The curd particles are produced, mixed with salt, a source of lipolytic enzyme and a source of a proteolytic enzyme and cured for a period of time sufficient to produce increased levels of C₂-C₁₀ fatty acids, as compared to conventional American-type cheese.

U.S. Patent No. 4,119,732 to Kratochvil is directed to a method for rapidly producing cheese. In the method, rennet, kid lipase and calf lipase are mixed with milk during the fermenting period. The milk is then coagulated and cut into curd particles followed by processing by the normal procedure for producing cheddar cheese, which includes a whey draining step. The curd is formed into a cheese block and the cheese block is aged for about 10 weeks to provide an intense aged cheddar cheese flavor.

U.S. Patent No. 3,975,544 to Kosikowski describes a method for producing cheddar cheese from pasteurized milk wherein an enzyme mixture is added to cheddared curds to substantially reduce the curing time of the cheese block. The cheese blocks are cured for a period of one month at 10° - 25° C.

U.S. Patent No. 4,244,971 to Wargel, et al. is directed to a process for the rapid manufacture of cheese products. In the process, a cultured cheese component is prepared by proteolyzing milk protein and by lipolyzing milkfat and forming a mixed fermentate of these hydrolyzed materials. The mixed fermentate is combined with a cheese starter culture and fermented to provide the cultured cheese component. The cultured cheese component is then mixed with a milk protein concentrate and a fat concentrate. This mixture is fermented to provide a cheese material capable of being made into process cheese type products by conventional cheese cooking techniques.

U.S. Patent No. 4,708,876 to Yokoyama et al. discloses a method for preparing a cheese flavor concentrate which involves providing an emulsion of a fat or oil containing butyric acid as an essential constituent fatty acid, a protein, a lactic bacteria assimilable saccharide and water. Such a fat or oil is an interesterified fat or oil containing 0.5 to 15% by weight of butyric acid and not more than 2% by weight of C₁₂ acid based on the total constituent fatty acids. To the emulsion is added a lipolytic enzyme and a proteolytic enzyme and lactic bacteria in amounts sufficient to impart a cheese flavor to the concentrate and then the resulting concentrate is aged for 0.5 to 7 days. After aging, if necessary, the enzymes can be deactivated by heating. One of the objectives of the Yokoyama et al. patent is to eliminate the production of an undesirable soapy flavor due to the presence of lauric acid which is a feature of earlier attempts to produce cheese concentrate quickly by reacting a proteolytic and/or lipolytic enzyme as well as lactic bacteria with milk or cheese curd.

It would be desirable to provide a method for producing a highly flavored product for use in cheese manufacture which does not involve a whey drainage step and which can be accomplished in a short period of time.

It is another object of the invention to produce a highly flavored component for use in cheese manufacture by a method which results in an increased yield in excess of 95%.

Accordingly, the present invention is directed to a process for producing a highly flavored component for use in cheese manufacture in a short period of time with minimal whey removal.

### Summary of the Invention

The present invention is directed to a process for producing a highly flavored component for use in cheese manufacture in a short period of time. The highly flavored component is intended for use in the manufacture of process cheese.

According to the present invention, there is provided a method for producing a highly flavored component for use in the manufacture of process cheese wherein said component has a highly developed cheese flavor comprising:
(1) providing as a substrate an aqueous, acidified, protein and fat cheese flavor precursor by mixing together (a) a dried protein source selected from non-fat dry milk, milk protein concentrate, whey protein concentrate, dried whey, soy protein, corn protein, wheat protein, rice protein and mixtures thereof, (b) a fat source selected from anhydrous milkfat, cream, butter and vegetable oils and mixtures thereof, (c) an acid source, and (d) water;
(2) adding to said substrate a first enzyme system comprising at least one, but not all, of a source for protease, a source for peptidase and a source for esterase;
(3) reacting said substrate with said first enzyme system for a period of 2 to 120 hours at a temperature of 120°F to 140°F [48.89-60.0°C] to provide a partially treated precursor;
(4) adding to said partially treated precursor a second enzyme system comprising the remaining source or sources for protease, peptidase and esterase not included in the first enzyme system;
(5) treating said partially treated cheese flavor precursor with said second enzyme system for a period of 12 hours to 120 hours at a temperature of 60°F to 140°F [15.56-60.0°C] sufficient to provide a treated precursor with a highly developed cheese flavor, wherein there is no deactivation step between the addition of the first enzyme system and the addition of the second enzyme system; and
(6) heating said precursor to a temperature and holding said substrate at said temperature for a time sufficient to inactivate said enzyme system to provide a highly flavored component for use without any requirement for a whey drainage step.

### Detailed Description of the Invention

It is well known that highly developed naturally derived cheese flavors can be made by enzyme modification of natural cheese curd. Such enzyme modified cheese is widely used to improve the cheese flavor of process cheese, cheese sauces, cheese spreads and related food products and to replace more expensive natural aged cheese as cheese flavor ingredients. The present invention produces a highly flavored component for use in cheese manufacture which has a cheese flavor similar to enzyme modified cheese curd. The starting material, however, is not natural cheese, but rather a cheese flavor precursor which is a mixture of a protein source and a fat source. The moisture level of the substrate is from about 30% to about 90%, preferably from about 40% to about 60% by weight and there is no whey draining step in the process. The protein source is a dried protein or concentrated material and is preferably a dairy ingredient, such as milk protein concentrate, whey protein concentrate, dried whey and non-fat dry milk. The fat source is preferably a milkfat such as anhydrous milkfat, butter or cream. Other protein sources, such as soy protein, corn protein, wheat protein and rice protein can be used. Other non-dairy fat sources, such as vegetable oil, can be used.

The dried protein source is reconstituted with water. The water is used at a level sufficient to provide a total moisture of from about 30% to about 90%, preferably from about 40% to about 60% in the substrate. The reconstituted protein source is combined with the fat source to provide the cheese flavor precursor. The precursor is acidified with an edible acid or by use of a lactic acid producing microorganism. Suitable edible acids are non-toxic, inorganic or organic acids, which include hydrochloric acid, acetic acid, maleic acid, tartaric acid, citric acid, phosphoric acid and lactic acid. The acid is added or fermentation of the microorganism occurs at a level sufficient to provide a pH of from 4 to 6, preferably from 5.0 to 5.4.

The enzyme system of the invention includes a lipase, a protease and a peptidase. The enzymes can be produced from various microorganisms or extracted from plant or animal tissues. The various enzymes of the enzyme system are available commercially as dry powders or in liquid form.

Lipase is an enzyme which is well known in the art. Lipase are typically derived from the gullet tissues of young animals (calves, kids or lambs) from the pancreas of adult animals, or from microbial sources. Various commercial preparations derived from gullet tissue are available from SKW Biosystems, Marschall Laboratory or other such companies under various trade names. The enzyme can be manufactured by grinding edible gullet with salt and non-fat dry milk, drying the mixture and grinding again. The activity levels, as described below, can be adjusted by adding non-fat dry milk or salt to the mixture. Microbial sources of lipase are, e.g., the molds *Candida cylindracea,* Type VIII, *Aspergilus oryzae, A. niger, Pencillium roqueforti, P. glaucum* and *Rhizopus oryzae.*

The amount of lipase to be used depends upon its activity. Lipase activity is measured in Lipase (forestomach) units (LFU), as described in *Food and Chemical Codex,* 3d Ed. (1981) at page 493. One LFU releases 1.25 µmol of butyric acid per minute from a solution containing sodium caseinate, hydroxylated lecithin and tri-n-butyrin under test conditions fully described in the *Codex.* As is clear to those skilled in the art, 1 gram of lipase having an activity of 40 LFU's per gram has the same fat-digestive capability of 2 grams of lipase having an activity of 20 LFU's per gram. In the practice of this invention, a powdered lipase derived from a mixture of calf and kid/lamb pregastric esterases is preferably used at a level off from 0.2% to 0.4% based on the weight of the substrate. An example of a suitable lipase is a commercially available product called "SKW Bio"^{™} sold by SKW Biosystems.

Protease is an enzyme which can be derived from fungal, plant or animal sources, as is well-known in the art. An example of a suitable protease is a commercially available powdered product called "Flavorzyme"^{™}, sold by Novo. The powdered protease is used at a level of from about 0.2% to about 0.4% based on the weight of the substrate.

An enzyme with exopeptidase activity, preferably amino peptidase activity, which acts upon bitter flavored peptides which result from protein hydrolysis are typically amino acid terminated with hydrophobic amino acids, is used in the enzyme system. The peptidase enzyme in concert with the protease enzyme creates a high concentration of free amino acids and small peptides which contribute to the cheese flavor. The peptidase can be a purified enzyme material or can be cells of a microbe which produces peptidase activity, such as *Lactobacillus helveticus.* The culture cells can be spray dried, freeze dried, frozen or freshly cultured cells and can be non-growing or capable of propagation within the substrate. Spray dried *Lactobacillus helveticus* cells are used at a level of from 0.05% to 0.30% based on the weight of the substrate. The preferred enzymes are all powders. However, suitable liquid forms of these enzymes would be acceptable for use in this invention.

In a process for producing the highly flavored component for use in cheese manufacture, a protein source selected from the group consisting of milk protein concentrate, whey protein concentrate, dried whey and non-fat dry milk, milkfat, salt, water and lactic acid are blended together in a suitable mixing device to provide the cheese flavor precursor. A homogenization device is used to reduce the fat droplet particle size and insure homogeneity of the substrate. The composition of the cheese flavor precursor has from 5% to 30% protein, from 10% to 40% fat and from 0% to 10% lactose. Salt is present at a level of from 0% to 10%. All percentages used herein are by weight unless otherwise indicated.

The cheese flavor precursor is treated with the enzyme system for a period of from 12 to 240 hours, preferably from 24 to 72 hours, to reach the desired flavor level. The treatment is conducted at a temperature of from 60° F (15.56° C) to 140° F (60.0° C). The desired flavor level can be judged organoleptically and can be estimated through analytical measurements, such as pH, titratable acidity, and concentration of free fatty acids and amino acids. When the target flavor is reached, the enzymes are deactivated by heating the mixture to a temperature of from 170° F (76.67° C) to 210° F (98.89° C) and holding the substrate at the elevated temperature for a sufficient time to ensure complete enzyme deactivation, e.g., from 5 to 60 minutes.

The enzymes are added sequentially to provide different flavor profiles. Preferably, one or more of the enzymes is added and a treatment period of from 4 to 120 hours is conducted. The remaining enzymes are then added and the treatment continues for further predetermined time of from 12 to 120 hours. There is no deactivation step between the sequential addition of the enzymes. The use of sequential addition of the enzymes permits great flexibility in modifying the final flavor of the highly flavored component.

The process is preferably conducted in a single vessel without transfer to additional vessels for sequential steps. The vessel is preferentially provided with mixing equipment to ensure good contact between the enzymes and the substrate materials. A scraped surface mixing tank is preferred. A recirculation and homogenization device may be employed to prevent segregation of a fat phase from aqueous materials. Water may be added during the fermentation to maintain desired moisture content and acidic or basic materials may be added to adjust the pH.

The highly flavored component which is produced is typically a paste with a moisture content in the range of from 30% to 90%, preferably from 40% to 60%. The highly flavored cheese component can be spray dried to provide a powder with or without the addition of carrier materials, such as whey concentrate or maltodextrins.

Milk protein concentrate and whey protein composition are preferred protein sources for use in the preparation of the substrate of the invention. The concentration of milk protein concentrate and whey protein concentrate is typically as follows:

| Component | Fat % | Protein % | Lactose % | Salt % | Water % |
|---|---|---|---|---|---|
| Milk protein concentrate | 1-5 | 55-95 | 1-20 | 1-5 | 1-5 |
| Whey protein concentrate | 1-5 | 55-95 | 1-20 | 1-5 | 1-5 |

In another embodiment of the invention, a first enzyme treatment takes place at a relatively high temperature of from 120° F (48.89° C)to 140° F (60.0° C). At least one of the enzymes is added and is incubated at this temperature for a first treatment of from about 2 to 6 hours. The remaining enzymes are then added for a second treatment period of from 6 to 240 hours which takes place at a temperature of from about 60° F (15.56° C) to about 140° F (60.0° C).

The following examples further illustrate various features of the invention, but are intended to in no way limit the scope of the invention as set forth in the appended claims.

### Example 1

A cheese flavor precursor is made using the following ingredients:

| Ingredient | Wt. % |
|---|---|
| Milk protein concentrate (70% total protein) | 23.14 |
| Anhydrous milkfat | 29.73 |
| Sodium chloride | 2.11 |
| Lactic acid (88 wt %) | 0.85 |
| Water | 44.17 |

The cheese flavor precursor has a protein level of 16.2%, a fat level of 29.7% and a moisture level of 51.1% The fresh cheese is mixed in a mixing tank using vacuum aspiration of dry ingredients and the slurry is passed through a shearing pump.

40 pounds (18.14kg) of the cheese flavor percursor is placed into a jacketed tank with scraped surface mixing. To this, 0.5% sodium phosphate monobasic emulsifier is added. The mixture is heated to 165° F (73.89° C) and held for 5 minutes to pasteurize the contents, then cooled to 131° F (55.0° C). "Flavorzyme"^{™} protease enzyme is added at 0.3 wt. %. The mixture is held at 131° F (55.0° C) for 4 hours with mixing. At this point, the mixture is cooled to 87° F (30.56° C) and 0.16% of a spray-dried culture of *Lactobacillus helveticus* Enzeco^{™} (Medipharm) and 0.28% of a blend of calf and kid/lamb pregastric esterases (SKW Bio^{™}) are added. This mixture is held for 48 additional hours at 87° F (30.56° C) with stirring. An external circulation loop is piped from the bottom to the top of the tank, with a positive displacement pump and an in-line hydroshear homogenizer (Gaulin). At the end of this period, the material is heated to 190° F (87.78° C) and held for 30 minutes to deactivate the enzyme and provide a highly flavored component for use in cheese manufacture.

### Example 2

A cheese flavor precursor was made as in Example 1, except in place of Flavorzyme^{™}, 0.2% of Neutral Bacterial Protease^{™} (EDC) and 0.3% of Promod 215P^{™} (Biocatalysts, Ltd.) fungal protease was used and the hold time at 131° F (55.0° C) was 12 hours. The deactivation time at 190° F (87.78° C) is reduced to 15 minutes.

### Example 3

The highly flavored component of Example 1 was used to make loaf-type process cheese, incorporating the component at 3.5 wt. % of the process cheese. This process cheese, containing 10% aged natural flavor cheese, was found to have equal or higher flavor attribute scores, as judged by a trained panel of judges, to similar process cheeses made with over 20% aged natural flavor cheese.

## Claims

1. A method for producing a highly flavored component for use in the manufacture of process cheese wherein said component has a highly developed cheese flavor comprising:
(1) providing as a substrate an aqueous, acidified, protein and fat cheese flavor precursor by mixing together (a) a dried protein source selected from non-fat dry milk, milk protein concentrate, whey protein concentrate, dried whey, soy protein, corn protein, wheat protein, rice protein and mixtures thereof, (b) a fat source selected from anhydrous milkfat, cream, butter and vegetable oils and mixtures thereof, (c) an acid source, and (d) water;
(2) adding to said substrate a first enzyme system comprising at least one, but not all, of a source for protease, a source for peptidase and a source for esterase;
(3) reacting said substrate with said first enzyme system for a period of 2 to 120 hours at a temperature of 120°F to 140°F [48.89-60.0°C] to provide a partially treated precursor;
(4) adding to said partially treated precursor a second enzyme system comprising the remaining source or sources for protease, peptidase and esterase not included in the first enzyme system;
(5) treating said partially treated cheese flavor precursor with said second enzyme system for a period of 12 hours to 120 hours at a temperature of 60"F to 140°F [15.56-60.0°C] sufficient to provide a treated precursor with a highly developed cheese flavor, wherein there is no deactivation step between the addition of the first enzyme system and the addition of the second enzyme system; and
(6) heating said precursor to a temperature and holding said substrate at said temperature for a time sufficient to inactivate said enzyme system to provide a highly flavored component for use without any requirement for a whey drainage step.

2. A method according to claim 1, wherein said protein source is selected from non-fat dry milk, milk protein concentrate, whey protein concentrate, dried whey and mixtures thereof.

3. A method according to claim 1 or claim 2, wherein said fat source is selected from anhydrous milkfat, cream, butter and mixtures thereof.

4. A method according to any one of claims 1 to 3, wherein said acid source is selected from an edible acid and a lactic acid producing microorganism.

5. A method according to any one of claims 1 to 4, wherein said inactivation of said enzymes is at a temperature of from 170° F (76.67° C) to 210° F (98.89° C) for a period of from 5 to 60 minutes.

6. A method according to any one of claims 1 to 5, wherein the moisture level of said precursor is from 30% to 90.

7. A method according to any of claims 1 to 6, wherein the moisture level of said precursor is from 40% to 60%.

## Patentansprüche

1. Verfahren zur Herstellung eines geschmacksstarken Bestandteils zur Verwendung bei der Schmelzkäseherstellung, bei dem der Bestandteil einen stark entwickelten Käsegeschmack hat und bei dem man
(1) als Substrat eine wässrige, angesäuerte Protein- und Fettkäsegeschmacksvorstufe dadurch bildet, daß man (a) eine getrocknete Proteinquelle, die unter fettfreier Trockenmilch, Milchproteinkonzentrat, Molkeproteinkonzentrat, getrockneter Molke, Sojaprotein, Maisprotein, Weizenprotein, Reisprotein und deren Gemischen ausgewählt ist, (b) eine Fettquelle, die unter wasserfreiem Milchfett, Sahne, Butter und pflanzlichen Ölen und deren Gemischen ausgewählt ist, (c) eine Säurequelle und (d) Wasser zusammenmischt;
(2) dem Substrat ein erstes Enzymsystem zusetzt, das wenigstens eine, aber nicht alle drei von einer Quelle für Protease, einer Quelle für Peptidase und einer Quelle für Esterase enthält;
(3) das Substrat mit dem ersten Enzymsystem während eines Zeitraums von 2 bis 120 Stunden bei einer Temperatur von 120°F bis 140°F [48,89°C bis 60,0°C] zu einer teilweise behandelten Vorstufe umsetzt;
(4) der teilweise behandelten Vorstufe ein zweites Enzymsystem zusetzt, das die restliche(n), in dem ersten Enzymsystem nicht enthaltene(n) Quelle oder Quellen für Protease, Peptidase und Esterase enthält;
(5) die teilweise behandelte Käsegeschmacksvorstufe mit dem zweiten Enzymsystem während eines Zeitraums von 12 Stunden bis 120 Stunden bei einer Temperatur von 60°F bis 140°F [15,56 bis 60,0°C] behandelt, die zur Bildung einer behandelten Vorstufe mit einem stark entwickelten Käsegeschmack ausreicht, wobei es zwischen der Zugabe des ersten Enzymsystems und der Zugabe des zweiten Enzymsystems keine Desaktivierungsstufe gibt; und
(6) die Vorstufe auf eine Temperatur erhitzt und das Substrat auf der genannten Temperatur für eine ausreichende Zeit hält, um das Enzymsystem zu desaktivieren und einen geschmacksstarken Bestandteil zu schaffen, der zu verwenden ist, ohne daß eine Molkeableitungsstufe erforderlich ist.

2. Verfahren nach Anspruch 1, bei dem die Proteinquelle unter fettfreier Trockenmilch, Milchproteinkonzentrat, Molkeproteinkonzentrat, getrockneter Molke und deren Gemischen ausgewählt ist.

3. Verfahren nach Anspruch 1 oder Anspruch 2, bei dem die Fettquelle unter wasserfreiem Milchfett, Sahne, Butter und deren Gemischen ausgewählt ist.

4. Verfahren nach einem der Ansprüche 1 bis 3, bei dem die Säurequelle unter einer genießbaren Säure und einem Milchsäure erzeugenden Mikroorganismus ausgewählt ist.

5. Verfahren nach einem der Ansprüche 1 bis 4, bei dem die Inaktivierung der Enzyme bei einer Temperatur von 170°F (76,67°C) bis 210°F (98,89°C) während einer Zeitdauer von 5 bis 60 Minuten erfolgt.

6. Verfahren nach einem der Ansprüche 1 bis 5, bei dem der Feuchtigkeitsgehalt der genannten Vorstufe 30% bis 90% beträgt.

7. Verfahren nach einem der Ansprüche 1 bis 6, bei dem der Feuchtigkeitsgehalt der genannten Vorstufe 40% bis 60% beträgt.

## Revendications

1. Procédé de production d'un composant hautement aromatisé à utiliser dans la fabrication de fromage fondu dans lequel ledit composant a un arôme de fromage hautement développé, comprenant :
(1) la fourniture comme substrat d'une protéine aqueuse acidifiée et d'un précurseur d'arôme de fromage gras en mélangeant conjointement (a) une source de protéine séchée provenant de lait sec dégraissé, de concentré de protéines de lait, de concentré de protéines de lactosérum, de lactosérum séché, de protéine de soja, de protéine de maïs, de protéine de blé, de protéine de riz et de mélanges de ceux-ci, (b) une source de graisse choisie parmi la graisse anhydre du lait, la crème, le beurre et des huiles végétales et des mélanges de ceux-ci, (c) une source d'acide et (d) de l'eau ;
(2) l'addition audit substrat d'un premier système d'enzyme comprenant au moins une source, mais pas toutes, d'une source de protéase, d'une source de peptidase et d'une source d'estérase ;
(3) la réaction dudit substrat avec ledit premier système d'enzyme pendant une période de 2 à 120 heures à une température de 48,89-60,0°C (120°F à 140°F) pour fournir un précurseur partiellement traité ;
(4) l'addition audit précurseur partiellement traité d'un second système d'enzyme comprenant la source restante ou les sources de protéase, de peptidase et d'estérase non incluses dans le premier système d'enzyme ;
(5) le traitement dudit précurseur d'arôme de fromage partiellement traité avec ledit second système d'enzyme pendant une période de 12 à 120 heures à une température de 15,56-60,0°C (60°F à 140°F) suffisante pour fournir un précurseur traité avec un arôme de fromage hautement développé, dans lequel il n'y a pas d'étape de désactivation entre l'addition du premier système d'enzyme et l'addition du second système d'enzyme ; et
(6) le chauffage dudit précurseur à une température et le maintien dudit substrat à ladite température pendant un temps suffisant pour inactiver ledit système d'enzyme pour fournir un composant hautement aromatisé à utiliser sans besoin quelconque d'une étape de drainage du lactosérum.

2. Procédé selon la revendication 1, dans lequel ladite source de protéine est choisie parmi du lait sec dégraissé, du concentré de protéines de lait, du concentré de protéines de lactosérum, de lactosérum séché et de mélanges de ceux-ci.

3. Procédé selon la revendication 1 ou la revendication 2, dans lequel ladite source de graisse est choisie parmi la graisse anhydre de lait, la crème, le beurre et les mélanges de ceux-ci.

4. Procédé selon l'une quelconque des revendications 1 à 3, dans lequel ladite source d'acide est choisie parmi un acide comestible et un micro-organisme producteur d'acide lactique.

5. Procédé selon l'une quelconque des revendications 1 à 4, dans lequel ladite inactivation desdites enzymes se fait à une température de 76,67°C (170°F) à 98, 89°C (210°F) pendant une période de 5 à 60 minutes.

6. Procédé selon l'une quelconque des revendications 1 à 5, dans lequel le taux d'humidité dudit précurseur est de 30% à 90%.

7. Procédé selon l'une quelconque des revendications 1 à 6, dans lequel le taux d'humidité dudit précurseur est de 40% à 60%.
